# EUROPÄISCHE PATENTANMELDUNG

(11) **EP 1 113 294 A2**
(43) Veröffentlichungstag der Anmeldung: **04.07.2001**
(21) Anmeldenummer: 00126962.0
(22) Anmeldetag: 08.12.2000
(51) Int. Cl.: G01V 3/10

(54) **Metalldetektor und Verfahren zum Betreiben eines Metalldetektors**

(30) Priorität: 30.12.1999 DE 19963773
(71) Anmelder: SECON GmbH, 50997 Köln (DE)
(72) Erfinder: Münscher, Dieter, 51143 Köln (DE); Ebinger, Klaus, 51143 Köln (DE)
(74) Vertreter: Heim, Hans-Karl, Dipl.-Ing.

(57) **Zusammenfassung**

Die Erfindung betrifft ein Verfahren zum Betreiben eines Metalldetektors, bei dem ein Oszillator einen Schwingkreis zur Abstrahlung elektromagnetischer Wechselfelder veranlasst, die Wechselfelder und damit das Schwingungsverhalten des Oszillators durch die Anwesenheit von Metall beeinflusst werden, der Oszillator mit einer Rückkopplung betrieben wird und der Arbeitspunkt des Oszillators durch eine Phasensteuerung verändert wird, wobei unterschiedliche Positiv- und Negativeffekte der Umgebung, insbesondere eines Laterit-Bodens, durch die Wahl unterschiedlicher Phasenlagen der Rückkopplungsspannung unterdrückt werden und wobei zur Unterscheidung von unterschiedlichen Positiv- und Negativeffekten der Umgebung die Amplitude eines Nachweissignals bei unterschiedlichen Phasenlagen der Rückkopplungsspannung ausgewertet wird. Ferner betrifft die Erfindung einen Metalldetektor zur Durchführung des Verfahrens.

## Beschreibung

Die Erfindung betrifft ein Verfahren zum Betreiben eines Metalldetektors, bei dem ein Oszillator einen Schwingkreis zur Abstrahlung elektromagnetischer Wechselfelder veranlasst, die Wechselfelder und damit das Schwingungsverhalten des Oszillators durch die Anwesenheit von Metall beeinflusst werden, der Oszillator mit einer Rückkopplung betrieben wird und der Arbeitspunkt des Oszillators durch eine Phasensteuerung der Rückkopplungsspannung verändert wird. Die Erfindung betrifft ferner einen Metalldetektor mit einem rückgekoppelten Oszillator, einem Schwingkreis zur Abstrahlung elektromagnetischer Wechselfelder und Mitteln zum Steuern der Phase und zum Verändern des Arbeitspunktes des Oszillators.

Ein gattungsgemäßes Verfahren und ein gattungsgemäßer Metalldetektor sind aus der DE 196 26 363 A1 bekannt. Bei Metalldetektoren, welche nach dem Dämpfungsprinzip arbeiten, wird ausgenutzt, dass Metallgegenstände einen stark dämpfenden Effekt auf die Schwingungsamplitude des als Sender wirkenden Schwingkreises ausüben. Metalle bewirken also, dass bei Annäherung die Amplitude des Oszillators sinkt. Man spricht von einem Positiveffekt.

Es erweist sich als grundsätzliches Problem, dass der Nachweis von Metallgegenständen durch die Umgebung des Metalldetektors bzw. des Metallgegenstandes gestört wird. Die Störungen der Umgebung können sich auf grundsätzlich zwei verschiedene Weisen zeigen. Zum Einen können sie einen Effekt bewirken, welcher in dieselbe Richtung zeigt wie der dämpfende Effekt aufgrund eines Metallgegenstandes (Positiveffekt). Zum Anderen können sie auch einen entdämpfenden Effekt - einen sogenannten Negativeffekt - bewirken. Einen Negativeffekt beobachtet man beispielsweise bei magnetischen Böden, wie etwa in Gegenden vulkanischen Ursprungs, als auch bei Lateritböden. Magnetische Böden und Lateritböden können je nach den Umständen jedoch auch zu einem Positiveffekt führen.

Im Zusammenhang mit dem gattungsgemäßen Verfahren und dem gattungsgemäßen Metalldetektor gemäß DE 196 26 363 A1 hat man bereits erkannt, dass sich Störeffekte, sowohl Negativeffekte als auch Positiveffekte, durch eine Änderung der Rückkopplungsphase des Oszillators eliminieren lassen. Es wurde auch bereits angesprochen, dass eine derartige Anpassung des Arbeitspunktes des Suchoszillators automatisch erfolgen könnte.

Allerdings ist das gattungsgemäße Verfahren in seiner Anwendung eingeschränkt, da es sich im Wesentlichen nur auf die Unterdrückung der Effekte magnetischer Böden bezieht.

In der US 5,729,143 ist ein Metalldetektor mit einer Sende- und einer Empfangsspule beschrieben. Zwar kann dort die Phasenlage eines Probepulses über einen bestimmten Bereich variiert werden. Jedoch wird eine Unterscheidung unterschiedlicher Umgebungseffekte nicht durchgeführt.

Auch die US 4,783,630 betrifft einen Metalldetektor mit Sende- und Empfangsspule. Eine Auswertung bei unterschiedlichen Phasenlagen einer Rückkopplungsspannung ist darin nicht vorgesehen.

In der GB 2 104 660 A ist ein Schaltkreis zum Nachweis von Metallteilen in magnetischen Böden offenbart, bei welchem die von den magnetischen Böden herrührendenden Signale kompensiert werden können. Zum Abgleich wird dort der Arbeitspunkt eines Oszillators mit Hilfe eines Potenziometers eingestellt. Die Probleme mit Böden, die das Vorhandensein von Metall lediglich vortäuschen, wie etwa ein Laterit-Boden, wurden jedoch in dieser Druckschrift noch nicht erkannt.

Die DE 198 03 957 C1 betrifft ein Metallsuchgerät und ein Verfahren zur Detektion metallischer Gegenstände.
Zwar wird eine Rückkopplung verwendet, um den Arbeitspunkt des Oszillators zu verändern. Es sind jedoch keine Maßnahmen angegeben, um unterschiedliche Effekte aufgrund der Umgebungsbedingungen zu berücksichtigen bzw. zu unterdrücken.

Der Erfindung liegt somit die **Aufgabe** zugrunde, ein Verfahren und einen Metalldetektor zur Verfügung zu stellen, welche einen grösseren Anwendungsbereich haben und mit welchen insbesondere unterschiedlichen Effekten der Umgebung Rechnung getragen werden kann.

Diese Aufgabe wird mit den Merkmalen der Ansprüche 1 bzw. 11 gelöst.

Ausgehend vom gattungsgemäßen Verfahren schlägt die Erfindung in ihrer wesentlichen Idee vor, dass unterschiedliche Positiv- und Negativeffekte der Umgebung, insbesondere eines Laterit-Bodens, durch die Wahl unterschiedlicher Phasenlagen der Rückkopplungsspannung unterdrückt werden und dass zur Unterscheidung von unterschiedlichen Positiv- und Negativeffekten der Umgebung die Amplitude eines Nachweissignals bei unterschiedlichen Phasenlagen der Rückkopplungsspannung ausgewertet wird.

Geht man über den Kompensations- bzw. Phasenverschiebungsbereich für eine gattungsgemäße Unterdrückung von Bodeneffekten hinaus, so stellt sich überraschenderweise heraus, dass sich in Abhängigkeit unterschiedlicher Metallarten unterschiedliche Amplitudenänderungen des Nachweissignals ergeben. Beispielsweise lässt sich so Eisen von Nichteisen, z.B. Nickel, unterscheiden. Man kann über die Phase der Rückkopplungsspannung den Arbeitspunkt des Oszillators z.B. so einstellen, dass sich bei Annäherung an Eisen die Amplitude durch die permeable Wirkung (Entdämpfung, Negativeffekt) erhöht, während sich die Amplitude bei Nichteisen durch den Wirbelstromeffekt (Dämpfung, Positiveffekt) verringert. Beide Signalrichtuntungen können als Suchinformation aufbereitet werden. Bei kleineren Eisenteilchen hat diese Metallunterscheidung ihre Grenzen, wenn der Wirbelstromeffekt die permeable Wirkung von kleineren Eisenteilchen aufhebt. Es ist zu betonen, dass mit dem Verfahren nicht nur zwischen verschiedenen Metallen unterschieden werden kann. Vielmehr kann auch diskriminiert bzw. selektiert werden. Über die geeignete Einstellung der Phase des Suchoszillators können so z.B. kleine Eisenteilchen dem Nachweis vollkommen entzogen werden.

Es ist vorteilhaft, wenn die vom Oszillator abgegebene Erregerspannung dem Schwingkreis über eine Induktivität zugeführt wird. Eine derartige Induktivität hat eine entkoppelnde Wirkung zwischen dem Oszillator und dem sendenden Schwingkreis, so dass das Rauschen und/oder das Stoßen beträchtlich reduziert werden. Die Schwingungsamplitude kann damit um ein Vielfaches der Batteriespannung erhöht werden, so dass Amplitudenwerte zwischen etwa 10 V und 100 V erzeugt werden können. Eine derartige Amplitudenverstärkung wäre bei nicht entkoppelten Systemen aufgrund der Rauscheffekte nicht praktikabel. Ferner ist durch die erfindungsgemäße Maßnahme eine automatische Phasensteuerung möglich, da der Oszillator stets unabhängig vom sendenden Schwingkreis in seinem optimalen Arbeitspunkt betrieben werden kann. Die Wirkung aktiver Bauelemente, welche z.B. der Phasensteuerung dienen, ist ebenfalls von dem Sendeschwingkreis entkoppelt. Die Wirkung der Induktivität kann auch durch andere Bauteile erzielt werden, beispielsweise durch eine Treiberstufe. Auch eine Kombination von Induktivität und Treiberstufe ist denkbar.

Vorzugsweise wird der Arbeitspunkt des Oszillators durch eine Amplitudensteuerung verändert. Es ist somit möglich, gleichzeitig eine Phasensteuerung und eine Amplitudensteuerung vorzunehmen, so dass der Arbeitspunkt sowohl im Hinblick auf die Bodenkompensation als auch auf die grundsätzliche Nachweisempfindlichkeit eingesellt werden kann.

Bevorzugt wird die Oszillatorspannung gleichgerichtet und einem Mikroprozessor zugeführt. Die gleichgerichtete Oszillatorspannung ist ein Maß für die Schwingungsamplitude des Oszillators und somit eine ausreichende Grundlage für eine Amplitudenauswertung.

Die Zuführung der Oszillatorspannung zu einem Mikroprozessor ist insbesondere dann nützlich, wenn die Phase in Abhängigkeit einer Ausgabe des Mikroprozessors gesteuert wird. Mikroprozessorsteuerungen haben sich in der Technik bewährt, so dass das Nachweisverfahren hierdurch besondern ökonomisch wird.

Besonders bevorzugt ist dabei, dass auch die Amplitude in Abhängigkeit einer Ausgabe des Mikroprozessors gesteuert wird. Auch hierdurch erhält man ein besonders ökonomisches Verfahren; ferner kann der Mikroprozessor die Amplitude und die Phase gleichzeitig steuern, so dass der optimale Arbeitspunkt sowohl im Hinblick auf die Phase als auch im Hinblick auf die Amplitude eingestellt wird.

Vorzugsweise wird die Amplitude in dem Mikroprozessor ausgewertet, und von dem Mikroprozessor wird die Ausgabe eines Anzeigesignals veranlasst. Der Mikroprozessor kann somit also eine weitere Aufgabe übernehmen, nämlich die Aufbereitung des Nachweissignals in ein für den Benutzer wahrnehmbares Signal, etwa eine Tonausgabe.

Vorzugsweise erfolgt ein Kompensieren von störenden Einflüssen der Umgebung automatisch oder manuell über den Mikroprozessor. Der Mikroprozessor dient also auch als Eingabemedium für den Nutzer, so dass dieser, je nach den speziellen Umgebungsbedingungen, eine automatische Kompensierung veranlassen, diese beeinflussen oder eine manuelle Kompensierung durchführen kann.

Neben der Verarbeitung der Signale mit einem Mikroprozessor, d.h. einer digitalen Verarbeitung kann es auch vorteilhaft sein, dass die Oszillatoramplitude analog stabilisiert wird. Um die Erfindung zu verwirklichen ist eine Mikroprozessorschaltung nicht erforderlich. Vielmehr kann auch auf analoge Komponenten zurückgegriffen werden. Die Amplitudenstabilisierung lässt eine beliebige Phasenänderung der Rückkopplungsspannung zur geeigneten Arbeitspunkteinstellung zu.

Es ist bevorzugt, wenn mit einem Hochpass zwischen dem Schwingkreis und der Phasensteuerung Erdfeldeffekte unterdrückt werden. Somit ist es möglich, die Spule im Raum zu drehen, ohne dass die Messergebnisse durch das Erdmagnetfeld beeinflusst werden.

Der erfindungsgemäße Metalldetektor sieht vor, dass die Phasenlage der Rückkopplungsspannung über einen Bereich veränderbar ist, so dass unterschiedliche Positiv- und Negativeffekte der Umgebung, insbesondere eines Laterit-Bodens, unterdrückt werden können bzw. zwischen diesen unterschieden werden kann und dass der Schwingkreis über eine Induktivität mit der vom Oszillator abgegebenen Erregerspannung beaufschlagt ist. Bei dem gattungsgemäßen Metalldetektor ist eine derartige Phasensteuerung nicht möglich, insbesondere aufgrund der nicht ausreichenden Verstärkung eines einzelnen Transistors. Verwendet man aber geeignete Komponenten, wie z.B. einen Operationsverstärker, so kann die Phasensteuerung einen hinreichenden Bereich erfassen, um verschiedenste Umgebungseffekte zu berücksichtigen, so wie dies im Zusammenhang mit dem erfindungsgemäßen Verfahren beschrieben wurde. Aufgrund der Induktivität bzw. einer zusätzlichen Treiberstufe wird eine Entkopplung erreicht, so dass störende Einflüsse aufgrund von Rauschen und/oder Stoßen eliminiert werden.

Besonders bevorzugt ist es, wenn Mittel zum Steuern der Amplitude und damit zum Verändern des Arbeitspunktes des Oszillators vorgesehen sind. Der Metalldetektor kann daher nicht nur im Hinblick auf die Phasenlage und somit auf die grundsätzliche Bodenkompensation abgeglichen werden. Vielmehr kann auch der optimale Arbeitspunkt bezüglich der Oszillatoramplitude durch eine Steuerung kontinuierlich eingestellt werden.

Bevorzugt ist die Oszillatorspannung über einen Gleichrichter einem Mikroprozessor zuführbar. Der Mikroprozessor erhält hierdurch die erforderliche Amplitudeninformation, so dass diese für weitere Maßnahmen zur Verfügung steht.

Zum Beispiel ist es in diesem Zusammenhang vorteilhaft, wenn die Mittel zum Steuern der Phase in Abhängigkeit von einer Ausgabe des Mikroprozessors arbeiten. Der Mikroprozessor ist damit zentrales Steuerungselement in dem erfindungsgemäßen Metalldetektor.

Dieser Vorteil kommt besonders auch dann zum Tragen, wenn die Mittel zum Steuern der Amplitude in Abhängigkeit von einer Ausgabe des Mikroprozessors arbeiten. Der Mikroprozessor steuert somit in Abhängigkeit der Oszillatoramplitude sowohl die Phase der Rückkopplungsspannung als auch die Amplitude des Oszillators.

Bevorzugt weist der Mikroprozessor Mittel zur Amplitudenauswertung und Mittel zur Anzeigesignalausgabe auf. Der Mikroprozessor bildet somit auch die Schnittstelle zwischen dem primären Nachweissignal und dem Signal, welches beispielsweise in Form einer Tonausgabe dem Benutzer vermittelt wird.

Es kann auch nützlich sein, dass eine analoge Amplitudenstabilisierung vorgesehen ist. Es ist also möglich, die Erfindung mit analogen Mitteln zu realisieren. Insbesondere ist die Amplitudenstabilisierung im Hinblick darauf nützlich, dass eine beliebige Phasenänderung zur geeigneten Arbeitspunkteinstellung ermöglicht wird.

Vorzugsweise ist zwischen dem Schwingkreis und den Mitteln zum Steuern der Phase ein Hochpass vorgesehen. Auf diese Weise werden Effekte aufgrund des Erdmagnetfeldes unterdrückt, so dass sich die Suchspule ohne Beeinträchtigung des Messergebnisses im Raum drehen lässt.

Der Erfindung liegt die überraschende Erkenntnis zugrunde, dass bei ausreichender Phasenverschiebung der Rückkopplungsspannung verschiedenste Umgebungseffekte unterdrückt bzw. berücksichtigt werden können. Vorteilhafterweise werden ein hochempfindliches Verfahren sowie ein hochempfindlicher Metalldetektor dadurch zur Verfügung gestellt, dass die Erregerspannung des Oszillators dem Schwingkreis über eine Induktivität zugeführt wird. Hierdurch kommt es zu einer Entkopplung, so dass geeignete Maßnahmen im Hinblick auf eine Arbeitspunkteinstellung getroffen werden können, ohne dass unerwünschte Rausch- bzw. Stoßeffekte das Nachweisergebnis verschlechtern. Zur Bodenkompensation, Metallunterscheidung und Diskriminierung wird eine Phasensteuerung durchgeführt, die gegenüber dem Primärsignal genügend vor- oder nacheilt, um den gewünschten Anzeigeeffekt bzw. das gewünschte Suchverhalten zu realisieren. Ferner ist zu betonen, dass auch in der Phasenkette mit steilen Schwingkreisen zur Filterung gearbeitet werden kann. Auf diese Weise wird die Phasenverschiebung, welche zur Bereitstellung der erfindungsgemäßen Effekte nötig ist, reduziert. Konstruktiv lassen sich solche Effekte in der Phasenkette z.B. durch steuernde Induktivitäten und/oder Schwingkreisgebilde bereitstellen.

Die Erfindung ermöglicht es daher, Bodenstöreffekte hervorragend zu unterdrücken bzw. zu eliminieren und schafft die Möglichkeit, Metallobjekte nach Größe und Material zu selektieren, wobei hierfür auch eine +/- Anzeige einsetzbar ist.

Die Funktionen des vorteilhafterweise eingesetzten Mikroprozessors können auch durch eine reine Analoglösung realisiert werden.

Die Erfindung wird nun mit Bezug auf die begleitenden schematischen Zeichnungen anhand von Ausführungsformen beispielhaft beschrieben. Dabei zeigt
- Fig. 1: einen schematischen Schaltplan eines erfindungsgemäßen Metalldetektors in einer ersten Ausführungsform;
- Fig. 2: einen schematischen Schaltplan eines erfindungsgemäßen Metalldetektors in einer zweiten Ausführungsform.

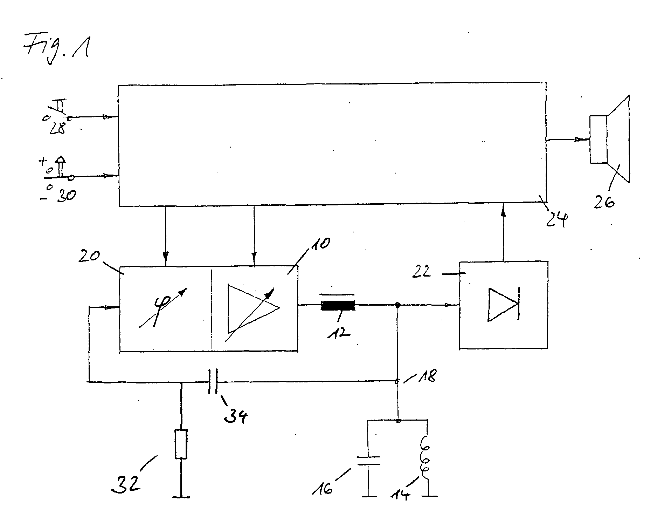

Figur 1 zeigt einen Oszillator 10, der über eine Induktivität 12 mit einem Schwingkreis gekoppelt ist, welcher eine Spule 14 und einen Kondensator 16 aufweist. An dem Abgriff 18 zwischen der Induktivität 12 und dem Schwingkreis 14, 16 wird die Spannung auf den Oszillator 10 über eine Phasensteuerung 20 rückgekoppelt. Die Ausgangsspannung der Induktivität 12, welche ebenfalls als Energiespeicher dient, wird ebenfalls dem Gleichrichter 22 zugeführt. Dieser überträgt die gleichgerichtete Spannung an einen Mikroprozessor 24. Dieser Mikroprozessor 24 hat nun mehrere Aufgaben. Zum Einen liefert er eine Ausgabe für die Phasensteuerung 20.

Zum Anderen sorgt er für eine Amplitudensteuerung, wie durch den Pfeil des schematisch als Operationsverstärker dargestellten Oszillators 10 gezeigt ist. Der Mikroprozessor 24 führt ferner eine Amplitudenauswertung durch. In Abhängigkeit dieser Amplitudenauswertung kommt es gegebenenfalls zu einer Tonausgabe über den Lautsprecher 26. Durch die Schalter oder Taster 28, 30 wird dem Mikroprozessor 24 von der bedienenden Person mitgeteilt, ob eine automatische oder eine manuelle Bodenkompensation durchgeführt werden soll. Ferner kann eine automatische Bodenkompensation durch die Eingabemittel 28, 30 beeinflusst werden. Zwischen dem Schwingkreis 14, 16 und dem Rückkopplungspfad ist ein Hochpass vorgesehen, welcher hier in Form eines Widerstandes 32 und eines Kondensators 34 dargestellt ist.

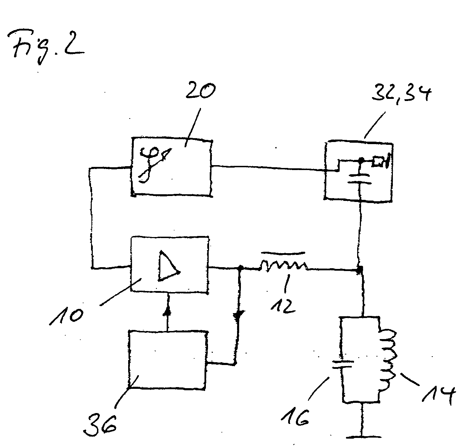

Fig. 2 zeigt ein Schaltbild für einen Metalldetektor in einer zweiten Ausführungsform. Die Besonderheit an dieser Ausführungsform besteht in der Amplitudenregelung 36. Es ist also nicht erforderlich, den Metalldetektor digital unter Verwendung eines Mikroprozessors auszulegen; vielmehr kann die Erfindung auch unter Verwendung von ausschließlich analogen Komponenten verwirklicht werden.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Betreiben eines Metalldetektors, bei dem
- ein Oszillator (10) einen Schwingkreis (14, 16) zur Abstrahlung elektromagnetischer Wechselfelder veranlasst,
- die Wechselfelder und damit das Schwingungsverhalten des Oszillators (10) durch die Anwesenheit von Metall beeinflusst werden,
- der Oszillator (10) mit einer Rückkopplung betrieben wird und
- der Arbeitspunkt des Oszillators (10) durch eine Phasensteuerung (20) der Rückkopplungsspannung verändert wird,
dadurch **gekennzeichnet,**
- dass unterschiedliche Positiv- und Negativeffekte der Umgebung, insbesondere eines Laterit-Bodens, durch die Wahl unterschiedlicher Phasenlagen der Rückkopplungsspannung unterdrückt werden und
- dass zur Unterscheidung von unterschiedlichen Positiv- und Negativeffekten der Umgebung die Amplitude eines Nachweissignals bei unterschiedlichen Phasenlagen der Rückkopplungsspannung ausgewertet wird.

2. Verfahren nach Anspruch 1,
dadurch **gekennzeichnet,**
dass die vom Oszillator (10) abgegebene Erregerspannung dem Schwingkreis (14, 16) über eine Induktivität (12) zugeführt wird.

3. Verfahren nach Anspruch 1 oder 2,
dadurch **gekennzeichnet,**
dass der Arbeitspunkt des Oszillators (10) durch eine Amplitudensteuerung verändert wird.

4. Verfahren nach einem der vorangehenden Ansprüche,
dadurch **gekennzeichnet,**
dass die vom Oszillator (10) abgegebene Erregerspannung gleichgerichtet wird und einem Mikroprozessor (24) zugeführt wird.

5. Verfahren nach Anspruch 4,
dadurch **gekennzeichnet,**
dass die Phase der Erregerspannung in Abhängigkeit einer Ausgabe des Mikroprozessors (24) gesteuert wird.

6. Verfahren nach Anspruch 4 oder 5,
dadurch **gekennzeichnet,**
dass die Amplitude der Erregerspannung in Abhängigkeit einer Ausgabe des Mikroprozessors (24) gesteuert wird.

7. Verfahren nach einem der Ansprüche 4 bis 6,
dadurch **gekennzeichnet,**
- dass die Amplitude der Erregerspannung in dem Mikroprozessor (24) ausgewertet wird und
- dass von dem Mikroprozessor (24) die Ausgabe eines Anzeigesignals veranlasst wird.

8. Verfahren nach einem der Ansprüche 4 bis 7,
dadurch **gekennzeichnet,**
dass das Kompensieren von störenden Einflüssen der Umgebung automatisch oder manuell über den Mikroprozessor (24) erfolgt.

9. Verfahren nach einem der Ansprüche 1 bis 3,
dadurch **gekennzeichnet,**
dass die Oszillatoramplitude analog stabilisiert wird.

10. Verfahren nach einem der vorangehenden Ansprüche,
dadurch **gekennzeichnet,**
dass mit einem Hochpass (32, 34) zwischen dem Schwingkreis (14, 16) und der Phasensteuerung (20) Erdfeldeffekte unterdrückt werden.

11. Metalldetektor mit
- einem rückgekoppelten Oszillator (10),
- einem Schwingkreis (14, 16) zur Abstrahlung elektromagnetischer Wechselfelder und
- Mitteln (20) zum Steuern der Phase und Verändern des Arbeitspunktes des Oszillators (10),
dadurch **gekennzeichnet,**
- dass die Phasenlage der Rückkopplungsspannung über einen Bereich veränderbar ist, so dass unterschiedliche Positiv- und Negativeffekte der Umgebung, insbesondere eines Laterit-Bodens, unterdrückt werden können bzw. zwischen diesen unterschieden werden kann und
- dass der Schwingkreis (14, 16) über eine Induktivität (12) mit der vom Oszillator (10) abgegeben Erregerspannung beaufschlagt ist.

12. Metalldetektor nach Anspruch 11,
dadurch **gekennzeichnet,**
dass Mittel zum Steuern der Amplitude der Erregerspannung und damit zum Verändern des Arbeitspunktes des Oszillators (10) vorgesehen sind.

13. Metalldetektor nach einem der Ansprüche 11 oder 12,
dadurch **gekennzeichnet,**
dass die vom Oszillator abgegebene Erregerspannung über einen Gleichrichter (22) einem Mikroprozessor (24) zuführbar ist.

14. Metalldetektor nach Anspruch 13,
dadurch **gekennzeichnet,**
dass die Mittel (20) zum Steuern der Phase der Erregerspannung in Abhängigkeit einer Ausgabe des Mikroprozessors (24) arbeiten.

15. Metalldetektor nach Anspruch 13 oder 14,
dadurch **gekennzeichnet,**
dass die Mittel zum Steuern der Amplitude der Erregerspannung in Abhängigkeit einer Ausgabe des Mikroprozessors (24) arbeiten.

16. Metalldetektor nach einem der Ansprüche 13 bis 15,
dadurch **gekennzeichnet,**
dass der Mikroprozessor (24) Mittel zur Amplitudenauswertung und Mittel zur Anzeigesignalausgabe aufweist.

17. Metalldetektor nach einem der Ansprüche 11 oder 12,
dadurch **gekennzeichnet,**
dass eine analoge Amplitudensteuerung vorgesehen ist.

18. Metalldetektor nach einem der Ansprüche 11 bis 17,
dadurch **gekennzeichnet,**
dass zwischen dem Schwingkreis (14, 16) und den Mitteln (20) zum Steuern der Phase ein Hochpass (32, 34) vorgesehen ist.

19. Metalldetektor nach einem der Ansprüche 11 bis 18,
dadurch **gekennzeichnet,**
dass das dem Schwingkreis (14, 16) zugeführte Eingangssignal auf Mittel (20) zur Steuerung der Phase der Erregerspannung rückgekoppelt ist.

20. Metalldetektor nach einem der Ansprüche 11 bis 19,
dadurch **gekennzeichnet,**
dass der Ausgang der Induktivität (12) direkt auf den Eingang des Schwingkreises (14, 16) geführt ist.

21. Metalldetektor nach einem der Ansprüche 11 bis 20,
dadurch **gekennzeichnet,**
dass die Induktivität (12) dem Ausgang des Oszillators (10) als Energiespeicher nachgeschaltet ist.
